# EUROPEAN PATENT APPLICATION

(11) **EP 4 789 925 A1**
(43) Date of publication of application: **12.08.2026**
(21) Application number: 25204199.1
(22) Date of filing: 24.09.2025
(51) Int. Cl.: B60R 21/213

(54) **APPARATUS FOR MOUNTING CURTAIN AIRBAG CUSHION**

(30) Priority: 10.02.2025 KR 20250016657
(71) Applicant: Hyundai Mobis Co., Ltd., Gangnam-gu Seoul 06141 (KR)
(72) Inventor: IM, Ji Hyuk, 16891 Yongin-si (KR)
(74) Representative: Vossius & Partner Patentanwälte Rechtsanwälte mbB

(57) **Abstract**

An apparatus for mounting a curtain airbag cushion (10) and a system therefor are provided. The apparatus includes a ramp (100) on which a curtain airbag cushion folded in a rolled form is placed and supported, a fixing clip (200) fitted into a fixing portion (130) provided on the ramp for fixing the ramp to a vehicle body, the fixing clip having a connection hole (211,221) that is connected to a through-hole (131) formed in the fixing portion in a state where the fixing clip is fitted into the fixing portion, and a fastening member that passes through the connection hole of the fixing clip and the through-hole of the fixing portion to fastened the ramp to the vehicle body.

## Description

### CROSS-REFERENCE TO RELATED APPLICATION

The present application claims priority to and the benefit of Korean Patent Application No. 10-2025-0016657, filed on February 10, 2025, in the Korean Intellectual Property Office, the entire disclosure of which is incorporated herein by reference in its entirety for all purposes.

### BACKGROUND

### 1. Field

The present invention relates to an apparatus for mounting a curtain airbag cushion.

### 2. Description of the Related Art

In general, vehicles are equipped with various types of airbags for protecting occupants when an accident occurs. Among the airbags, a curtain airbag protects an occupant as an airbag cushion deploys while unfolding downward in the event of a vehicle rollover or side collision. This curtain airbag is mounted on a roof side rail of a vehicle body through mounting tabs provided on the airbag cushion. Here, the curtain airbag is mounted on the vehicle body by fastening bolts and washers to the mounting tabs.

However, since the mounting tabs are formed of a flexible fabric material, there are drawbacks such as difficulty in maintaining assembly torque during assembly of the mounting tabs to the vehicle body using bolts and occurrence of sagging due to difficulty in maintaining the shape, which results in poor assemblability and workability during the assembly to the vehicle body.

In order to solve these problems, a method of attaching and fixing hardware including a plastic plate and a push retainer to the mounting tab is used, but the mounting tab is pulled by the strong pressure generated when the airbag cushion is deployed, and due to this, an external force is applied to the plate, which can cause the hardware to break and scatter.

### SUMMARY

In a general aspect, here is provided an apparatus for mounting a curtain airbag cushion capable of enhancing assemblability and workability by improving a fixing structure of the curtain airbag cushion, and fundamentally preventing occurrence of scattering due to hardware breakage, which is a conventional problem, by preventing hardware from breaking even under strong pressure generated when the airbag cushion is deployed.

Problems to be solved by the present invention are not limited to those mentioned above, and other problems not mentioned will be clearly understood by those skilled in the art from the following description.

In a general aspect, an apparatus for mounting a curtain airbag cushion, includes: a ramp on which a curtain airbag cushion folded in a rolled form is placed and supported; a fixing clip fitted into a fixing portion provided on the ramp for fixing the ramp to a vehicle body, the fixing clip having a connection hole that is connected to a through-hole formed in the fixing portion in a state where the fixing clip is fitted into the fixing portion; and a fastening member configured to pass through the connection hole of the fixing clip and the through-hole of the fixing portion to fastened the ramp to the vehicle body.

The fixing clip may include: a first body disposed on a front surface of the fixing portion having a plate shape; a second body disposed on a rear surface of the fixing portion; and a connecting body connecting an upper end of the first body and an upper end of the second body.

A first connection hole may be formed in the first body and a second connection hole may be formed in the second body, wherein the first connection hole and the second connection hole are configured to form concentric circles.

The second body may include a plurality of tab members extending toward a center of the second connection hole, wherein the tab members are arranged to be spaced apart from each other along a periphery of the second connection hole.

The tab member may be provided around the second connection hole in a structure that protrudes rearward from the second body toward the vehicle body.

An end of the tab member may be configured to engage with a thread formed on the fastening member while the fastening member is fastened to the vehicle body by passing through the connection hole.

A size of a virtual circle implemented by ends of the plurality of tab members may be equal to or smaller than a size of the first connection hole.

At least one of the first body and the second body may be provided with a locking protrusion that is inserted into a locking hole of the fixing portion in a state where the fixing clip is fitted into the fixing portion to prevent the fixing clip from being separated from the fixing portion.

The locking protrusion may be provided in a structure that protrudes toward a space between the first body and the second body, and may have a structure in which a protruding size decreases toward lower ends of the first body and the second body.

The ramp may include: a support portion on which the curtain airbag cushion is placed, and a cover portion that extends forward from an upper end of the support portion and accommodates the curtain airbag cushion between the cover portion and the support portion; and a pair of fixing portions are provided in a structure that extends upward from an upper end of the support portion with the cover portion therebetween.

In another general aspect of the disclosure, a curtain airbag cushion system, includes: a curtain airbag cushion folded in a rolled form; a ramp configured to receive and support the curtain airbag cushion, the ramp including a fixing portion having a through hole , the fixing portion configured to fix the ramp to a vehicle body; a fixing clip fitted into the fixing portion and including a connection hole in communication with the through-hole of the fixing portion; and a fastening member configured to pass through the connection hole of the fixing clip and the through-hole of the fixing portion to fasten the ramp to the vehicle body.

### BRIEF DESCRIPTION OF THE DRAWINGS

FIG. 1 is a view showing a curtain airbag according to an embodiment of the present invention;
FIG. 2 is a view showing a cross-section taken along line I-I' in FIG. 1;
FIG. 3 is a view showing an apparatus for mounting a curtain airbag cushion according to an embodiment of the present invention;
FIGS. 4A and 4B are views showing a fixing clip in the apparatus for mounting a curtain airbag cushion;
FIGS. 5A and 5B are views showing structures of a connection hole and a tab member provided in the fixing clip, respectively;
FIG. 6 is a view showing a modified example of the fixing clip; and
FIG. 7 is a view showing a state where the fixing clip is fitted into a fixing portion.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

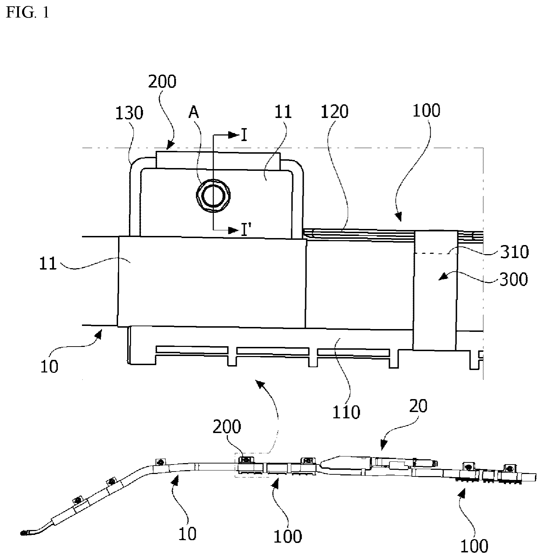

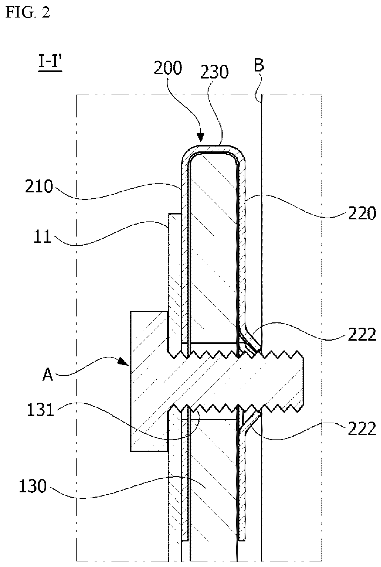

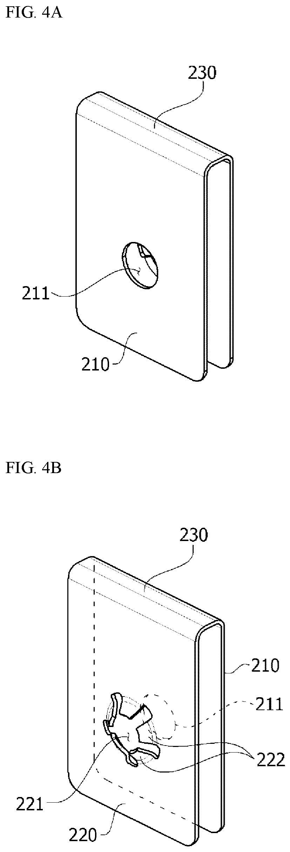

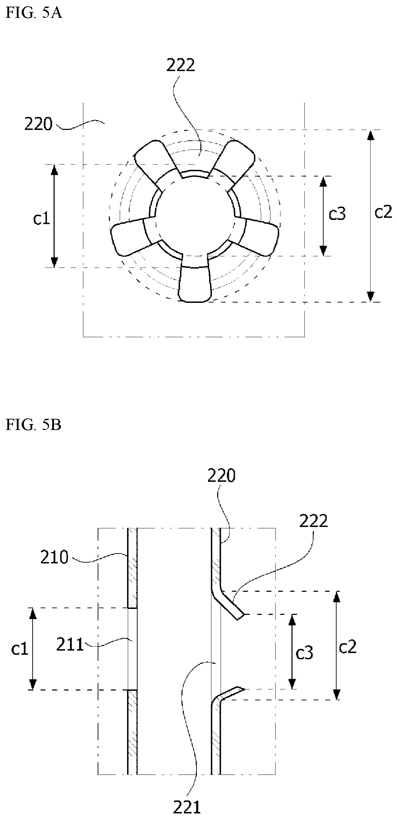

FIG. 1 shows a curtain airbag, and FIGS. 2 to 7 show an apparatus for mounting a curtain airbag cushion and configurations thereof.

A curtain airbag of a vehicle may include a curtain airbag cushion 10 that inflates and deploys when gas is injected, and an inflator 20 that generates gas when a vehicle collision occurs.

The curtain airbag cushion 10 and the inflator 20 may be assembled together and installed to be positioned on an upper body of a vehicle pillar. The inflator 20 is connected to a control device (not shown) of the vehicle, and when a collision is detected, the control device transmits a signal to the inflator 20. The inflator 20 receiving the signal generates gas. The curtain airbag cushion 10 inflates by the gas and unfolds toward a bottom of the vehicle, and is disposed between an occupant and a door to protect the occupant.

A mounting apparatus according to an embodiment of the present invention may be used to securely install the curtain airbag cushion 10 on a vehicle body.

Referring to the drawings, the apparatus for mounting the curtain airbag cushion according to the embodiment of the present invention may include a ramp 100 and a fixing clip 200.

The ramp 100 may be configured to support the curtain airbag cushion 10 folded in a rolled form. In the embodiment, the curtain airbag cushion 10 may be shaped to extend in a front-rear direction of the vehicle and provided folded in a rolled form. The curtain airbag cushion 10 may be provided with a mounting tab 11 connected to the ramp 100.

The ramp 100 may be fixed to a vehicle body B through a fastening member A. In the embodiment, the fastening member A may include a screw or a bolt.

The ramp 100 is provided with a fixing portion 130, and the fixing portion 130 may fix the ramp 100 to the vehicle body B in conjunction with the fastening member A.

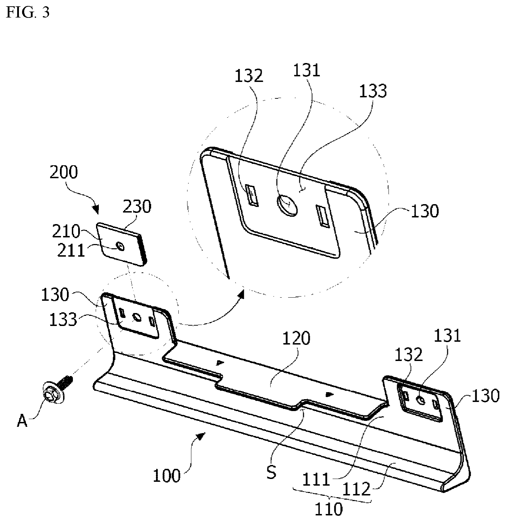

Referring to FIG. 3, the ramp 100 may include a support portion 110 on which the curtain airbag cushion 10 is placed, a cover portion 120 extending forward from an upper end of the support portion 110, and the fixing portion 130 extending upward from the upper end of the support portion 110.

The ramp 100 may have a structure in which the support portion 110, the cover portion 120, and the fixing portion 130 are integrally formed. In the embodiment, the ramp 100 may be made of a plastic having rigidity. However, the material of the ramp 100 is not limited thereto.

The support portion 110 may include a first part 111 that is connected in succession to the fixing portion 130 and vertically extends, and a second part 112 that extends forward from a lower end of the first part 111. The support portion 110 may have an overall "L" shaped cross-sectional structure.

The cover portion 120 may be disposed to cover the upper portion of the curtain airbag cushion 10 in a state where the curtain airbag cushion 10 is placed on the support portion 110. The cover portion 120 is configured to extend forward from the upper end of the support portion 110 to accommodate the curtain airbag cushion 10 between the cover portion 120 and the support portion 110. Specifically, the cover portion 120 may extend forward between a pair of fixing portions 130 and form an internal space S having a roughly "C" shape in conjunction with the first part 111 and the second part 112 of the support portion 110. The roll-folded curtain airbag cushion 10 may be accommodated within the interior space S.

A pair of fixing portions 130 may be provided in a structure that extends upward from an upper end of the support portion 110 with the cover portion 120 interposed therebetween. The fixing portion 130 has an overall flat quadrangular plate structure, and may be provided at each of both longitudinal edges of the first part 111 to extend upward.

A through-hole 131 to which a fastening member A is fastened may be formed in the fixing portion 130. The through-hole 131 may be formed through the fixing portion 130 approximately at the center of the fixing portion 130.

A locking hole 132 may be formed in the fixing portion 130. The locking hole 132 may be formed by passing through the fixing portion 130 on each of the left and right sides of the through-hole 131.

In the embodiment, the fixing portion 130 may have a groove 133 for guiding a region where the fixing clip 200 is fitted. The groove 133 may be formed in at least one of front and rear surfaces of the fixing portion 130. In the present embodiment, it is exemplified that the groove 133 is formed in the front surface of the fixing portion 130.

Meanwhile, the curtain airbag cushion 10 may be configured so that the mounting tab 11 is disposed on the front surface of the fixing portion 130 in a state of being accommodated in the internal space S of the ramp 100, and the fastening member A passes through the mounting tab 11 when fastened through the through-hole 131. Accordingly, the mounting tab 11 may be coupled and fixed to the fixing portion 130 using the fastening member A.

In addition, in the state where the curtain airbag cushion 10 is accommodated in the internal space S of the ramp 100, its movement may be restricted by a fixing strap 300 that integrally wraps the ramp 100 and the curtain airbag cushion 10.

The fixing strap 300 may prevent the curtain airbag cushion 10 placed on the ramp 100 from moving and being separated from the ramp 100 during the process of fixing the ramp 100 to the vehicle body B.

In the embodiment, the fixing strap 300 may include an adhesive tape, and the adhesive force may be used to simultaneously bind the curtain airbag cushion 10 and the ramp 100.

The fixing strap 300 may be configured to break when the curtain airbag cushion 10 is deployed. To this end, the fixing strap 300 may be made of a material that is easy to break or may be provided with a tear line 310 for breaking.

In the embodiment, at least two fixing straps 300 may be provided. However, the number of fixing straps 300 is not limited thereto, and two or more may be provided as needed.

The fixing clip 200 may be configured to be fitted into the fixing portion 130 of the ramp 100. The fixing clip 200 may fix the fastening member A fastened to the fixing portion 130.

Referring to the drawings, the fixing clip 200 may have connection holes 211 and 221 that are connected to the through-hole 131 formed in the fixing portion 130 in a state of being fitted into the fixing portion 130. The ramp 100 may be fixed to the vehicle body B using the fastening member A that integrally passes through the connection holes 211 and 221 and the through-hole 131 and is fastened to the vehicle body B.

The fixing clip 200 may include a first body 210 disposed on the front surface of a fixing portion 130 having a plate shape, a second body 220 disposed on the rear surface of the fixing portion 130, and a connecting body 230 connecting an upper end of the first body 210 and an upper end of the second body 220. Accordingly, the fixing clip 200 may have a cross-sectional structure that is approximately in an inverted U shape. In the embodiment, the fixing clip 200 may be made of a metal material having high rigidity.

A first connection hole 211 may be formed in the first body 210, and a second connection hole 221 may be formed in the second body 220. A size C2 of the second connection hole 221 is larger than a size C1 of the first connection hole 211, and the first connection hole 211 and the second connection hole 221 may be configured to form concentric circles. Here the sizes may be sizes of diameters.

The second body 220 may include a tab member 222 extending toward the center of the second connection hole 221.

A plurality of tab members 222 may be arranged to be spaced apart from each other along the periphery of the second connection hole 221. The tab member 222 may be provided around the second connection hole 221 in a structure that protrudes rearward from the second body 220 toward the vehicle body B.

An end of the tab member 222 may be configured to engage with a thread formed on the fastening member A during a process of fastening the fastening member A to the vehicle body B through the connection holes 211 and 221. That is, the tab member 222 may perform the same function as a nut that is threadedly engaged with the fastening member A to fix the fastening member A. In this case, a size C3 of a virtual circle implemented by the ends of the plurality of tab members 222 may be equal to or smaller than the size C1 of the first connection hole 211. This allows the fastening member A to be more strongly fixed.

This fixing clip 200 may fix the fastening member A, and at the same time, may prevent the fixing portion 130 from being damaged by the strong pressure generated when the curtain airbag cushion 10 inflates and deploys.

Specifically, when the mounting tab 11 is strongly pulled forward by the strong pressure generated as the curtain airbag cushion 10 deploys, a strong external force is applied to the fixing portion 130 connected to the mounting tab 11 through the fastening member A, and the fixing clip 200 surrounds and protects the fixing portion 130 to prevent the fixing portion 130 from being damaged. In particular, as the tab member 222 of the fixing clip 200 elastically deforms (compresses) between the fixing clip 200 and the vehicle body B, the tab member 222 functions as a bumper that absorbs shocks from an external force and minimizes transmission of the influence of the external force to the fixing portion 130. Accordingly, it is possible to prevent problems such as conventional hardware breaking and scattering.

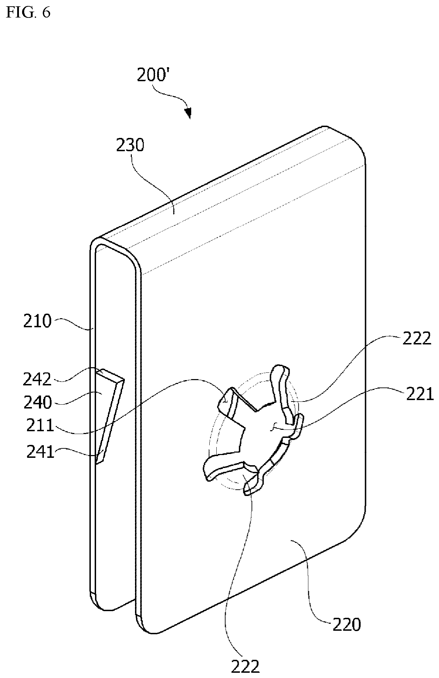

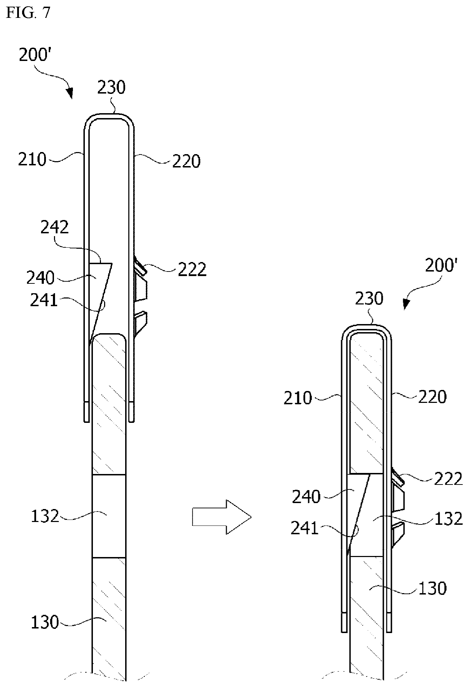

FIGS. 6 and 7 show a modified example of a fixing clip 200'.

Referring to the drawings, the fixing clip 200' may further include a locking protrusion 240.

The locking protrusion 240 is provided on at least one of a first body 210 and second body 220, and is configured to be inserted into the locking hole 132 of the fixing portion 130 in a state where the fixing clip 200' is fitted into the fixing portion 130 to prevent the fixing clip 200' from being separated from the fixing portion 130.

The locking protrusion 240 may be provided in a structure that protrudes toward the space between the first body 210 and the second body 220. In the present embodiment, the locking protrusion 240 is exemplified as being provided on the first body 210 and protruding toward the second body 220.

The locking protrusion 240 may have a structure in which a protruding size decreases toward lower ends of the first body 210 and the second body 220. That is, the locking protrusion 240 may have a right triangle structure with an inclined surface 241 that extends downward toward the first body 210.

As a locking step 242 between an upper end of the inclined surface 241 and the first body 210 is locked and fixed within the locking hole 132, this locking protrusion 240 may maintain the state where the fixing clip 200' is fitted into the fixing portion 130. Accordingly, it is possible to prevent the fixing clip 200' from being unintentionally separated due to external vibration or impact.

According to an embodiment of the present invention, it is possible to provide an apparatus for mounting a curtain airbag cushion capable of enhancing assemblability and workability by improving a fixing structure of the curtain airbag cushion, and fundamentally preventing occurrence of scattering due to hardware breakage, which is a conventional problem, by preventing hardware from breaking even under strong pressure generated when the airbag cushion is deployed.

An effect of the present invention is not limited to that mentioned above, and other effects not mentioned will be clearly understood by those skilled in the art from the description of claims.

Various embodiments of the present disclosure do not list all available combinations but are for describing a representative aspect of the present disclosure, and descriptions of various embodiments may be applied independently or may be applied through a combination of two or more.

A number of embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. An apparatus for mounting a curtain airbag cushion, comprising:
a ramp on which a curtain airbag cushion folded in a rolled form is placed and supported;
a fixing clip fitted into a fixing portion provided on the ramp for fixing the ramp to a vehicle body, the fixing clip having a connection hole that is connected to a through-hole formed in the fixing portion in a state where the fixing clip is fitted into the fixing portion; and
a fastening member configured to pass through the connection hole of the fixing clip and the through-hole of the fixing portion to fastened the ramp to the vehicle body.

2. The apparatus of claim 1, wherein the fixing clip includes:
a first body disposed on a front surface of the fixing portion having a plate shape;
a second body disposed on a rear surface of the fixing portion; and
a connecting body connecting an upper end of the first body and an upper end of the second body.

3. The apparatus of claim 2, wherein a first connection hole is formed in the first body and a second connection hole is formed in the second body, and
wherein the first connection hole and the second connection hole are configured to form concentric circles.

4. The apparatus of claim 3, wherein the second body includes a plurality of tab members extending toward a center of the second connection hole, and
wherein the tab members are arranged to be spaced apart from each other along a periphery of the second connection hole.

5. The apparatus of claim 4, wherein the tab member is provided around the second connection hole in a structure that protrudes rearward from the second body toward the vehicle body.

6. The apparatus of claim 4 or 5, wherein an end of the tab member is configured to engage with a thread formed on the fastening member while the fastening member is fastened to the vehicle body by passing through the connection hole.

7. The apparatus of claim 6, wherein a size of a virtual circle implemented by ends of the plurality of tab members is equal to or smaller than a size of the first connection hole.

8. The apparatus of any one of claims 2 to 7, wherein at least one of the first body and the second body is provided with a locking protrusion that is inserted into a locking hole of the fixing portion in a state where the fixing clip is fitted into the fixing portion to prevent the fixing clip from being separated from the fixing portion.

9. The apparatus of claim 8, wherein the locking protrusion is provided in a structure that protrudes toward a space between the first body and the second body, and has a structure in which a protruding size decreases toward lower ends of the first body and the second body.

10. The apparatus of any one of claims 1 to 9, wherein the ramp includes:
a support portion on which the curtain airbag cushion is placed, and a cover portion that extends forward from an upper end of the support portion and accommodates the curtain airbag cushion between the cover portion and the support portion; and
a pair of fixing portions are provided in a structure that extends upward from an upper end of the support portion with the cover portion therebetween.

11. A curtain airbag cushion system, comprising:
a curtain airbag cushion folded in a rolled form;
a ramp configured to receive and support the curtain airbag cushion, the ramp including a fixing portion having a through hole, the fixing portion configured to fix the ramp to a vehicle body;
a fixing clip fitted into the fixing portion and including a connection hole in communication with the through-hole of the fixing portion; and
a fastening member configured to pass through the connection hole of the fixing clip and the through-hole of the fixing portion to fasten the ramp to the vehicle body.
